# EUROPÄISCHE PATENTSCHRIFT

(11) **EP 1 750 340 B1**
(45) Veröffentlichungstag und Bekanntmachung des Hinweises auf die Patenterteilung: **04.05.2011**
(21) Anmeldenummer: 06015566.0
(22) Anmeldetag: 26.07.2006
(51) Int. Cl.: H02G 3/38

(54) **Kanal für Leitungsführung und Geräteeinbau**
Channel for installation of cables and apparatus
caniveau destiné à loger des câbles et des appareils

(30) Priorität: 03.08.2005 DE 202005012145 U
(43) Veröffentlichungstag der Anmeldung: 07.02.2007
(73) Patentinhaber: Tehalit GmbH, 67716 Heltersberg (DE)
(72) Erfinder: Kauf, Peter, 66482 Zweibrücken (DE); Schneckmann, Horst, 67705 Trippstadt (DE); Schnurr, Richard, 66957 Vinningen (DE)
(74) Vertreter: Patentanwälte Bitterich, Dr. Keller, Schwertfeger

(56) Entgegenhaltungen:
- EP-A2- 0 726 631
- FR-A1- 2 425 518
- JP-A- 9 158 454

## Beschreibung

Die Erfindung betrifft Bodenkanäle für Leitungsführung und Geräteeinbau gemäß dem Oberbegriff des Anspruchs 1.

Die FR 2 425 518 A1 offenbart einen Kanal, der vorzugsweise aus Kunststoff hergestellt ist und zur Lagerung und Halterung von elektrischen Kabeln, insbesondere auf dem Sektor der Gewerbebauten, zum Beispiel Fabriken und dergleichen, dient. Dieser Kanal weist dafür einen über ein Scharnier öffnenbaren, wiederverschließbaren Deckel auf, der zu diesem Zweck an einem Längsrand einen kreisrunden Querschnitt aufweist, der in einem korrespondierenden konkaven Querschnitt an einer Wand des Unterkastens drehbar gelagert ist. Am gegenüberliegenden Längsrand des Deckels ist ein Deckelelement angebracht, das in eine hakenförmigen Rinne an der entsprechenden Wand des Unterkastens clipartig einrastet_{.} Ein Lösen des Deckels vom Kanalunterkasten ist hier nicht vorgesehen. An den Kanal werden zudem kaum visuelle Ansprüche gestellt, da er vor allem in industriegebäuden verlegt wird. Er dient damit dem Anwendungsbereich konventioneller Kunstoffkabelkanäle.

Die JP 09 158454 A beschreibt einen Bodenbelag aus mehreren Bodenplatten, zwischen denen Freiräume für Kabelführungen gelassen sind. Diese Feiräume werden durch Abdeckplatten verschlossen. Zu diesem Zweck weisen die Bodenplatten an die Kanalfreiräume angrenzende Segmente auf, die entsprechend der Abdeckplattenhöhe niedriger sind als die Höhe der Grundplatten. Eine Fixierung der Abdeckplatten in offengekippter Stellung ist hier nicht vorgesehen.

In der EP 0 726 631 A2 ist der Aufbau einer kastenförmigen Unterflurdose beschrieben. Der Deckel ist dabei mittels Scharnieren an den Unterkasten angelenkt. Ein Ausrüstung mit Scharnierverbindungen ist allerdings mit nicht unerheblichen Mehrkosten verbunden.

Die EP 1 043 822 A offenbart einen Sockelleistenkanal für Leitungsführung und Geräteeinbau, der teilweise im Boden- und Wandaufbau versenkt ist. Dieser Sockelleistenkanal erfüllt die technischen Funktionen, bietet jedoch keinen gefälligen Anblick, so dass er für eine Verwendung in Wohnräumen und eleganten Büros eher ausscheidet.

Aus der DE 203 13 160 U ist ein im Bodenaufbau verlegbarer Kanal bekannt, der die volle technische Funktionalität mit einem ästhetisch ansprechenden, wenig auffälligen Design verbindet. Im fertigen Zustand ist von diesem Kanal nur der Deckel sichtbar. Der Deckel liegt bodengleich, überlappt jedoch dank seines seitlichen Überstandes die angrenzende Bodenbelagskante, wodurch sich nicht nur ein sauberes Bild ergibt, sondern auch die Bodenbelagskante geschützt wird.

Es hat sich herausgestellt, dass der Kanal verbesserungswürdig ist. Zum Einlegen bzw. Herausnehmen von Kabeln oder Leitungen muss der Installateur die Kanaldeckel abnehmen. Die Praxis hat gezeigt, dass die Installateure die abgenommenen Deckel wahllos irgendwo auf dem Boden deponieren. Dabei kommt es immer wieder vor, dass der Installateur die Deckel beschädigt, wenn er im Raum hin- und hergeht. Des Weiteren hat sich gezeigt, dass beim Wiederauflegen der Deckel diese nicht mehr in der alten Reihenfolge aufgelegt werden, so dass es oftmals zu Fehlstellungen kommt, insbesondere bei den Bodenbelägen.

Sind im Kanalunterteil Elektroinstallationsgeräte montiert, beispielsweise Starkstrom-, Telefon- oder Datensteckdosen, so müssen diese auch für die Endbenutzer zugänglich sein. Auch hier hat sich gezeigt, dass die losen Deckel nicht die Zustimmung der Endbenutzer finden.

Der naheliegende Gedanke, die Deckel mit Hilfe von Klappscharnieren zu befestigen, scheidet wegen der damit verbundenen Kosten aus.

Der vorliegenden Erfindung liegt daher die Aufgabe zugrunde, die gattungsgemäßen Bodenkanäle für Leitungsführung und Geräteeinbau so auszugestalten, dass die nach wie vor losen Kanaldeckel eine feste Montageposition erhalten.

Diese Aufgabe wird gelöst durch einen Bodenkanal mit den Merkmalen des Anspruchs 1.

Wird der Deckel für Arbeiten im Kanalinneren aufgeklappt, so wird sein kurzer Seitenschenkel in dem V-förmigen Ende des Stegs eingeklemmt. Der Deckel steht damit senkrecht zum Steg und bleibt dort so lange stehen, bis sein Schenkel aus dem V-förmigen Ende gelöst wird.

Gemäß einer Weiterbildung der Erfindung steigt der Steg gegenüber dem Boden des Unterteils im spitzen Winkel an. Das bedeutet, dass der in das V-förmige Ende eingeklemmte Deckel um denselben Winkel nach hinten geneigt ist. Diese Position verbessert die Klemmwirkung und verbessert die Zugänglichkeit zum Kanalunterteil.

Gemäß einer Ausgestaltung der Erfindung besitzt der Steg einen Fuß, mit dessen Hilfe er auf die Seitenwand des Kanalunterteils aufsteckbar ist. Auf diese Weise ist es möglich, das Kanalunterteil mit oder ohne den Kanaldeckel haltenden Steg einzusetzen.

Gemäß einer Ausgestaltung der Erfindung sind an der dem Steg gegenüberliegenden Seite des Kanalunterteils auf dem Boden desselben Deckelhalter errichtet.

Zwecks optimaler Anpassung an den endgültigen Bodenaufbau empfiehlt es sich, höhenverstellbare Füße vorzusehen, mit deren Hilfe der Abstand zwischen Kanal und Rohboden fein justiert werden kann.

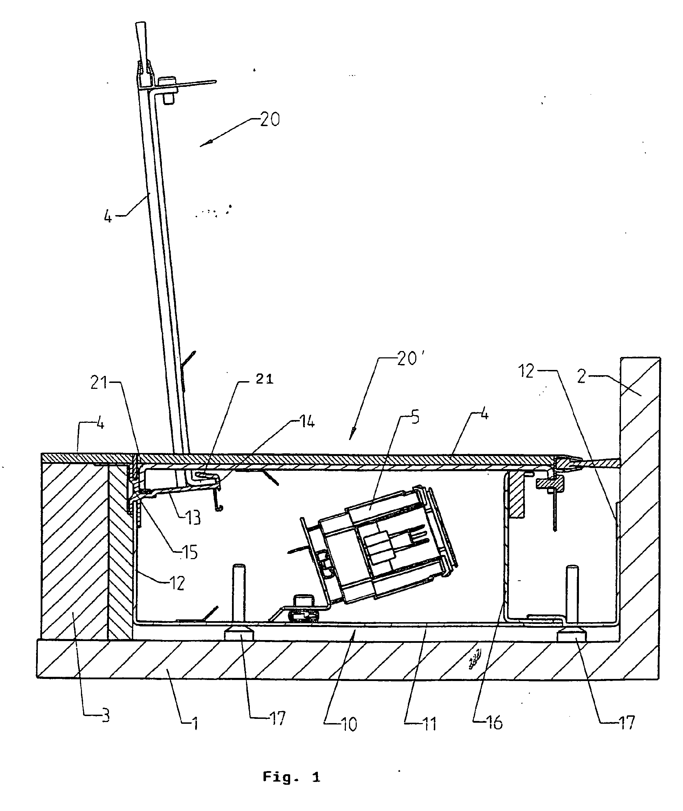

Anhand der Zeichnung soll die Erfindung in Form eines Ausführungsbeispiels näher erläutert werden.

Die Figur zeigt einen Ausschnitt aus einem Bodenaufbau mit eingesetztem Kanal für Leitungsführung und Geräteeinbau. Man erkennt einen Rohboden 1, eine Gebäudewand 2 und einen Estrich 3. Die Estrichoberseite ist mit einem Bodenbelag 4, beispielsweise einem Teppichboden, einem Parkett oder einem Laminat bedeckt.

Im Bodenaufbau 1, 2, 3, versenkt erkennt man ein Kanalunterteil 10 mit U-förmigem Querschnitt, umfassend einen Boden 11 und zwei Seitenwände 12. Im Boden sind höhenverstellbare Füße 17 vorgesehen. Des Weiteren befindet sich im Kanalunterteil 10 eine Geräteeinbaudose 5, in die ein Elektroinstallationsgerät aufnehmbar, beispielsweise eine Steckdose.

Auf dem Kanalunterteil 10 erkennt man zwei Kanaldeckel 20, 20'. Der in der Zeichnung hintere Deckel 20' liegt auf dem Kanalunterteil 10 auf, wozu dieses auf der rechten Seite eine Reihe von Deckelhaltern 16 aufweist. Die Außenseite der Deckel 20, 20' ist mit demselben Bodenbelag 4 belegt, so dass sich bei geschlossenen Deckeln 20, 20' ein einheitliches, ästhetisch einwandfreies Bodenbild ergibt.

Der in der Zeichnung vordere Deckel 20 ist geöffnet und steht leicht schräg nach hinten geneigt. In dieser Position wird er gehalten von einem Steg 13, der mit Hilfe seines Fußes 15 auf die linke Seitenwand 12 des Kanalunterteils 10 aufgesteckt ist. Das freie Ende 14 des Stegs 13 ist V-förmig abgewinkelt, wobei die Abmessungen so gewählt sind, dass ein am Deckel 20 angeformter kurzer Schenkel 21 lösbar aufgenommen wird. Dank der geneigten Position des Deckels 20 verklemmt sich der Schenkel 21 im V-förmigen Ende 14 des Stegs 13 und steht somit fest.

Soll der Deckel 20 wieder geschlossen werden, wird er nach vorne gekippt, wobei der Schenkel 21 leicht aus dem V-förmigen Ende 14 herausgeschoben wird.

## Patentansprüche

1. Bodenkanal für Leitungsführung und Geräteeinbau, umfassend
- ein Unterteil (10) mit
-- U-förmigem Querschnitt,
-- einem Boden (11)
-- zwei Seitenwänden (12),
- und wenigstens einen abnehmbaren Deckel (20, 20') mit
-- wenigstens einem kurzen Schenkel (21),
**gekennzeichnet durch** folgende Merkmale:
- an einer Seitenwand (12) des Unterteils (10) ist innen ein Steg (13) vorgesehen,
- das freie Ende (14) des Stegs (13) ist so geformt, dass
- der Schenkel (21) des Deckels (20) lösbar in das korrespondierend geformte Ende (14) einsetzbar und wieder herausschiebar ist.

2. Bodenkanal nach Anspruch 1, **gekennzeichnet durch** das Merkmal:
- das freie Ende (14) des Stegs (13) ist U-förmig.

3. Bodenkanal nach Anspruch 1, **gekennzeichnet durch** das Merkmal:
- das freie Ende (14) des Stegs (13) ist V-förmig.

4. Bodenkanal nach wenigstens einem der Ansprüche 1 bis 3, **gekennzeichnet durch** das Merkmal:
- der Steg (13) steigt gegenüber dem Boden (11) des Unterteils (10) im spitzen Winkel an.

5. Bodenkanal nach wenigstens einem der Ansprüche 1 bis 4, **gekennzeichnet durch** die Merkmale:
- der Steg (13) besitzt einen Fuß (15),
- der Fuß (15) ist auf die Seitenwand (12) aufsteckbar.

6. Bodenkanal nach wenigstens einem der Ansprüche 1 bis 5, **gekennzeichnet durch** das Merkmal:
- an der dem Steg (13) gegenüberliegenden Seite sind auf dem Boden (11) des Unterteils (10) Deckelhalter (16) errichtet.

7. Bodenkanal nach wenigstens einem der Ansprüche 1 bis 6, **gekennzeichnet durch** das Merkmal:
- im Boden (11) des Unterteils (10) sind höhenverstellbare Füße (17) vorgesehen.

8. Bodenkanal nach wenigstens einem der Ansprüche 1 bis 7, **gekennzeichnet durch** das Merkmal:
- der Steg (13) verläuft ungefähr rechtwinklig zur Seitenwand (12).

9. Bodenkanal nach wenigstens einem der Ansprüche 1 bis 7, **gekennzeichnet durch** das Merkmal:
- zumindest ein Teil des Stegs (13) verläuft ungefähr parallel zur Seitenwand (12)

## Claims

1. A floor channel for cable routing and apparatus installation, comprising
- an underpart (10) with
- U-shaped cross-section,
- a base (11),
- two side walls (12),
- and at least one removable cover (20,20') with
- at least one short arm (21),
**characterised by** the following features:
- on one side wall (12) of the underpart (10) a web (13) is provided in the interior,
- the free end (14) of the web (13) is formed so that
- the arm (21) of the cover (20) can be inserted releasably into the correspondingly formed end (14) and can be slid back therefrom.

2. A floor channel according to Claim 1, **characterised by** the feature:
- the free end (14) of the web (13) is U-shaped.

3. A floor channel according to Claim 1, **characterised by** the feature:
- the free end (14) of the web (13) is V-shaped.

4. A floor channel according to at least one of Claims 1 to 3, **characterised by** the feature:
- the web (13) ascends at an acute angle in relation the base (11) of the underpart (10).

5. A floor channel according to at least one of Claims 1 to 4, **characterised by** the features:
- the web (13) has a foot (15),
- the foot (15) can be mounted on the side wall (12).

6. A floor channel according to at least one of Claims 1 to 5, **characterised by** the feature:
- on the side opposite the web (13) cover holders (16) are erected on the base (11) of the underpart (10).

7. A floor channel according to at least one of Claims 1 to 6, **characterised by** the feature:
- vertically adjustable feet (17) are provided in the base (11) of the underpart (10).

8. A floor channel according to at least one of Claims 1 to 7, **characterised by** the feature:
- the web (13) extends approximately at right angles to the side wall (12).

9. A floor channel according to at least one of Claims 1 to 7, **characterised by** the feature:
- at least one part of the web (13) extends approximately parallel to the side wall (12).

## Revendications

1. Caniveau de sol destiné à loger des câbles et des appareils, comprenant :
- une partie inférieure (10) avec
- une section en forme de U,
- un fond (11),
- deux parois latérales (12),
- et au moins un couvercle amovible (20, 20') avec
- au moins une branche courte (21),
**caractérisé par** les caractéristiques suivantes :
- une barrette (13) est prévue à l'intérieur sur une paroi latérale (12) de la partie inférieure (10),
- l'extrémité libre (14) de la barrette (13) est réalisée d'une forme telle que
- la branche (21) du couvercle (20) peut être insérée de manière amovible dans l'extrémité (14) de forme correspondante, et en être retirée en glissant.

2. Caniveau de sol selon la revendication 1, **caractérisé par** la caractéristique suivante :
- l'extrémité libre (14) de la barrette (13) est en forme de U.

3. Caniveau de sol selon la revendication 1, **caractérisé par** la caractéristique suivante :
- l'extrémité libre (14) de la barrette (13) est en forme de V.

4. Caniveau de sol selon au moins une des revendications 1 à 3, **caractérisé par** la caractéristique suivante :
- la barrette (13) s'élève sous un angle aigu par rapport au fond (11) de la partie inférieure (10).

5. Caniveau de sol selon au moins une des revendications 1 à 4, **caractérisé par** les caractéristiques suivantes :
- la barrette (13) possède un pied (15).
- le pied (15) peut être emboîté sur la paroi latérale (12).

6. Caniveau de sol selon au moins une des revendications 1 à 5, **caractérisé par** la caractéristique suivante :
- des supports de couvercle (16) se dressent sur le fond (11) de la partie inférieure (10), sur le côté opposé à la barrette (13).

7. Caniveau de sol selon au moins une des revendications 1 à 6, **caractérisé par** la caractéristique suivante :
- des pieds réglables en hauteur (17) sont prévus dans le fond (11) de la partie inférieure (10).

8. Caniveau de sol selon au moins une des revendications 1 à 7, **caractérisé par** la caractéristique suivante :
- la barrette (13) s'étend environ à angle droit de la paroi latérale (12).

9. Caniveau de sol selon au moins une des revendications 1 à 7, **caractérisé par** la caractéristique suivante :
- au moins une partie de la barrette (13) s'étend environ parallèlement à la paroi latérale (12).
